# EUROPÄISCHE PATENTANMELDUNG

(11) **EP 2 368 730 A2**
(43) Veröffentlichungstag der Anmeldung: **28.09.2011**
(21) Anmeldenummer: 11156843.2
(22) Anmeldetag: 03.03.2011
(51) Int. Cl.: B60G 21/055

(54) **Stabilisatoranordnung**

(30) Priorität: 15.03.2010 DE 102010011531
(71) Anmelder: Benteler Automobiltechnik GmbH, 33102 Paderborn (DE)
(72) Erfinder: Smatloch, Dr. Christian, 33100, Paderborn (DE); Hammelmeier, Ullrich, 33100, Paderborn (DE)
(74) Vertreter: Griepenstroh, Jörg

(57) **Zusammenfassung**

Die Erfindung betrifft eine Stabilisatoranordnung (1) umfassend einen geteilten Torsionsstab und einen Torsionsstababschnitte (4) verbindenden Aktor (A) mit einem Aktorgehäuse (2), an welchem Enden (3) der Torsionsstababschnitte (4) festgelegt sind, wobei die mit dem Aktorgehäuse (2) verbundenen Enden (3) der Torsionsstababschnitte (4) als Flansch (5) ausgebildet sind, wobei die Flansche (5) aus den Enden (3) der Torsionsstababschnitte (4) geformt sind und die Flansche (5) über in ihrem Randbereich angeordnete Eingriffmittel (7) mit dem Aktorgehäuse (2) in Eingriff stehen.

## Beschreibung

Die Erfindung betrifft eine Stabilisatoranordnung mit den Merkmalen im Oberbegriff des Patentanspruchs 1 sowie eine Stabilisatoranordnung mit den Merkmalen im Oberbegriff des Patentanspruchs 2.

Stabilisatoren sind Torsionsfedern und dienen zur Wankstabilisierung des Aufbaus von Kraftfahrzeugen. Sie werden zwischen den Rädern einer Achse eines Kraftfahrzeugs angeordnet. Bei wechselseitiger Einfederung der Räder einer Achse verteilen Stabilisatoren die Radlast möglichst gleichmäßig. Dadurch wird das Fahrverhalten eines Kraftfahrzeugs in einem beherrschbaren Korridor gehalten. Neben passiven Stabilisatoren zählen auch aktive Stabilisatoren zum Stand der Technik. Bei aktiven Stabilisatoren ist zwischen Hälften eines Torsionsstabes ein Aktor vorgesehen, mit welchem aktiv das Wankverhalten des Aufbaus eines Kraftfahrzeugs beeinflusst werden kann.

Bei Einfederung eines Rades verdreht sich der Torsionsstab und mit ihm ein Teil des zwischengeschalteten Aktors. Dabei treten an der Verbindung zwischen dem Stabilisator und dem Aktor hohe mechanische Spannungen, insbesondere Scherspannungen, auf

Der Aktor kann über eine Schraubenverbindung mit dem Torsionsstab verbunden sein. Es ist aber auch bekannt, eine Stabilisatorhälfte über einen am Ende der Stabilisatorhälfte angeordneten Flansch mit dem Aktor zu verschweißen, wie dies beispielsweise in der DE 102 37 103 A1 beschrieben ist.

Ausgehend von diesem Stand der Technik liegt der Erfindung die Aufgabe zu Grunde, eine Stabilisatoranordnung zu schaffen, bei welcher die Verbindung zwischen Aktor und Torsionsstab hinsichtlich der Krafteinleitung und der Spannungsverteilung verbessert und zudem kostengünstig herstellbar ist

Die Lösung der Aufgabe wird in einer Stabilisatoranordnung mit den Merkmalen des Patentanspruchs 1 oder 2 gesehen.

Vorteilhafte Ausgestaltungen sind Gegenstand der Unteransprüche,

Die erfindtingsgemäße Stabilisatoranordnung umfasst einen geteilten Torsionsstab und einen dessen Torsionsstababschnitte verbindenden Aktor mit einem Aktorgehäuse, an welchem Enden der Torsionsstababschnitte festgelegt sind, Die mit dem Aktorgehäuse verbundenen Enden der Torsionsstababschnitte sind als Flansche ausgeführt. Erfingdungsgemäß sind die Flansche aus den Enden der Torsionsstababschnitte geformt. Zudem weisen die Flansche in ihrem Randbereich angeordnete Eingriffmittel auf, über welche sie mit dem Aktorgehäuse formschlüssig in Eingriff stehen.

Die erfindungsgemäße Stabilisatoranordnung, umfassend einen geteilten Torsionsstab und einen die Torsionsstabschnitte verbindenden Aktor mit einem Aktorgehäuse, wobei ein Ende des Torsionsstababschnittes mit dem Aktor gekoppelt ist und das mit dem Aktor verbundene Ende wenigstens eines Torsionsstabsabschnittes als Flansch ausgeführt ist, ist dadurch gekennzeichnet, dass der Flansch aus dem Ende eines Torsionsstababschnittes geformt ist und dass der Flansch über ein in seinem Randbereich angeordnetes Eingriffsmittel mit dem Aktor in Eingriff steht.

Im Rahmen der Erfindung ist unter der Anbindung an das Aktorgehäuse hier die Anwendung bzw. Anbindung an einen Aktor zu verstehen. Der Aktor kann beispielsweise ein aktiver Stellaktuator, ein semiaktiver Stellaktuator oder aber ein schaltbarer Aktuator sein. Insbesondere ist das Aktorgehäuse im Bereich der Koppelung auf der einen Seite des Stabilisators relativ zu der gegenüberliegenden Seite verdrehbar zu verstehen. Hierbei kann es sich beispielsweise um einen Anbindungsbereich des Aktors handeln. Dieser Anbindungsbereich kann beispielsweise als Stellglied oder auch als Koppelflansch an dem Aktor als Bestandteil des Aktors ausgebildet sein,

Vorteilhafterweise ist der Flansch umfangsseitig des Torsionsstababschnitts umlaufend ausgestaltet, so dass er gleichmäßig aus dem Ende des Torsionsstababschnitts herausgeformt werden kann.

Die Eingriffmitlel im Randbereich des Flansches können in einer ersten Ausführungsform entlang einer radial äußeren Umfangsfläche des Flansches angeordnet sein. Dabei sind die Eingriffmittel so ausgerichtet, dass sie in radiale Richtung einer Torsionsachse des Torsionsstababschnitts weisend mit dem Aktorgehäuse in Eingriff stehen. Die aktorseitigen Eingriffsmittel sind in diesem Fall an einer Innenfläche des Aktorgehäuses angeordnet.

Bevorzugt ist. das Eingriffmittel als umlaufender Zahnkranz ausgeführt Der Flansch weist in diesem Fall eine umlaufende Außenverzahnung und das Aktorgehäuse eine entlang der Innenseite verlaufende, korrespondierende Innenverzahnung auf. Flansch und Aktorgehäuse stehen über ihren gesamten Umfang in verzahnendem Eingriff. Dadurch wird eine gleichmäßig Kraftübertragung von dem Torsionsstababschnitt auf das Aktorgehäuse realisiert

Alternativ hierzu ist es auch denkbar, die Eingriffmittel entlang eines äußeren Randbereichs derart anzuordnen, dass sie parallel zu einer Torsionsachse des Torsionsstababschnitts weisend mit dem Aktorgehäuse in Eingriff stehen, d.h. in Axialrichtung vorstehen. Die Anordnung im Randbereich hat den Vorteil, dass mit zunehmendem Abstand von der Torsionsachse bei gleich bleibendem Drehmoment geringere lokale Kräfte übertragen werden müssen, so dass die Spannungsbelastung in den Bauteilen reduziert werden kann.

Wenigstens ein Torsionsstababschnitt der Stabilisatoranordnung kann als Hohlprofil ausgeführt sein. Alternativ kommen Vollprofile zum Einsatz.

Die Ausformung des Flansches aus dem mit dem Aktorgehäuse in Eingriff stehenden Endes des Torsionsstababschnittes kann sowohl aus dem Hohlprofil als auch aus dem Vollprofil erfolgen. Der einstückig hergestellte Übergangsbereich von Torsionsstababschnitt zum Flansch ist durch eine hohe Stabilität und einen gleichmäßigen Spannungsverlauf unter Last gekennzeichnet. Zusätzliche Verbindungselemente entfallen.

In einer bevorzugten Ausführungsvariante der vorliegenden Erfindung sind die Eingriffsmittel einstückig an dem Flansch des Stabilisatorabschnittes selber ausgebildet. Hierbei kommen beispielsweise Zahnkränze zum Einsatz, welche einstückig durch beispielsweise spanende Bearbeitung des umgeformten Endes eines Torisonsabschnitts hergestellt werden können. Besonders bevorzugt sind die Zahnkränze zumindest partiell vergütet, insbesondere sind diese durch den Vergütungsprozess gehärtet. Gegebenenfalls kann es jedoch auch von Vorteil sein, wenn hier eine duktilere Werkstoffgefügestruktur hergestellt wird, sodass die Zähne über die Dauer des Betriebes nicht spröde werden und eine damit einhergehende Rissebildung weitestgehend vermieden wird.

Der Flansch kann derart ausgestaltet sein, dass er nicht nur in das Aktorgehäuse eingreift, sondern gleichzeitig auch eine Seitenwand des Aktorgehäuses bildet Hierzu ist ein Außendurchmesser des Flansches einem Außendurchmesser des Aktorgehäuses angepasst. Es ist natürlich ebenso denkbar eine Seitenwand des Aktorgehäuses mit einer Eingriffmittel aufweisenden Öffnung zur Aufnahme des Flansches zu versehen.

Durch das Formen des Flansches aus dem Ende des Torsionsstababschnittes kann ein kontinuierlicher, fließender Übergang vom Torsionsstababschnitt zum Flansch erzeugt werden. Dieser Übergang wirkt sich hinsichtlich der Krafteinleitung beim Verdrehen des Torsionsstababschnittes ausgesprochen positiv auf die Spannungsverteilung im Bauteil aus.

Ein Vorteil der erfindungsgemäßen Stabilisatoranordnung gegenüber geschweißten Lösungen ist, dass Veränderungen des Gefüges in der Schweißeinflusszone entfallen. Die Schweißnahtvorbereitung und die Anlagen zum Verschweißen werden nicht mehr benötigt. Die Prozesssicherheit bei der Herstellung sowie die Dauerhaltbarkeit der Verbindung zwischen Aktorgehäuse und Torsionsstababschnitt werden verbessert.

In einer weiteren vorteilhaften Ausführungsvariante der vorliegenden Erfindung ist an dem Aktor ein Stellglied ausgebildet, wobei das Stellglied mit dem Ende des Torsionsstababschnittes über die Eingriffmittel gekoppelt ist. Vorzugsweise ist hierzu der am Ende des Torsionsstababschnittes ausgebildete Flansch in Eingriff mit dem Stellglied über die erfindungsgemäßen Eingriffmittel, insbesondere die erfindungsgemäßen einstückig ausgebildeten Zahnkränze, in formschlüssigen Eingriff gebracht, Hier ist im Rahmen der Erfindung beispielsweise eine Presssitzverbindung vorstellbar, so dass die hergestellte formschlüssige Verbindung zwischen Flansch und Stellglied schubstarr auch durch die Torsionsbelastungen miteinander gekoppelt sind.

Die Erfindung wird nachfolgend anhand von in den Figuren schematisch dargestellten Ausführungsbeispielen näher erläutert. Es zeigen:
- Figuren 1 und 1a: eine erfindungsgemäße Stabilisatoranordnung;
- Figuren 2 und 2a: eine alternative Ausführung einer erfindungsgemäßen Stabilisatoranordnung
- Figur 3: und eine erfindungsgemäße Stabilisatoranordnung.

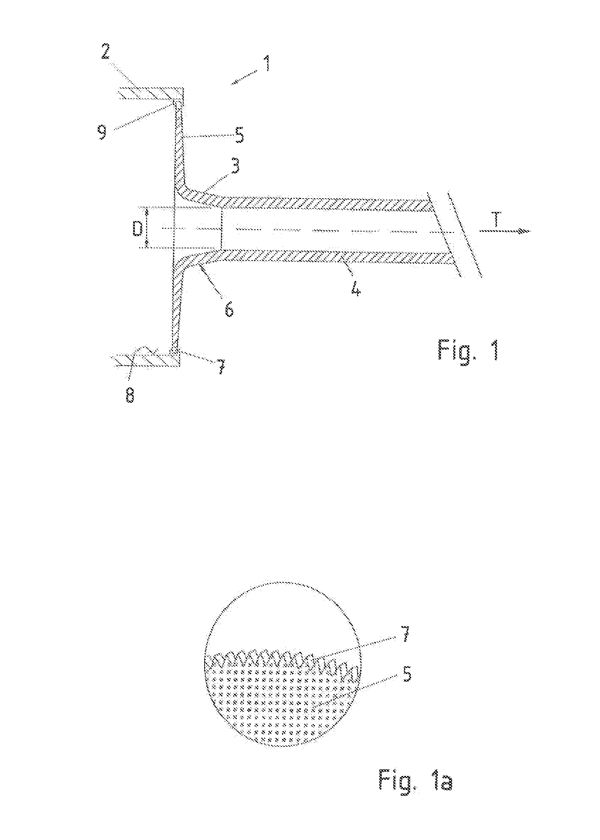

Figur 1 zeigt einen Ausschnitt aus einer Stabilisatoranordnung 1 für ein Kraftfahrzeug, umfassend einen Teil eines Aktorgehäuses 2 in Verbindung mit einem Ende 3 eines Torsionsstababschnitts 4. Der Torsionsstababschnitt 4 ist in dieser Ausführung als Hohlprofil ausgestaltet. Aus dem zum Aktorgehäuse 2 weisenden Ende 3 wurde ein Flansch 5 herausgeformt, so dass ein kontinuierlicher Übergang vom Torsionsstababschnitt 4 zum Flansch 5 erzielt wird. Dies ist in der Figur durch die kontinuierliche Zunahme eines Durchmessers D des Torsionsstababschnitts 4 im Übergangsbereich 6 zwischen Torsionsstababschnitt 4 und Flansch 5 zu erkennen.

Der Flansch 5 weist entlang seiner radial äußeren Umfangsfläche angeordnete, in radiale Richtung einer Torsionsachse T des Torsionsstababschnitts 4 weisende Eingriffsmittel 7 auf. Über diese Eingriffmittel 7 steht der Flansch 5 mit dem Aktorgehäuse 2 in Eingriff. Das Aktorgehäuse 2 weist entlang einer Innenseite 8 korrespondierende Eingriffmittel 9 in Form einer Innenverzahnung auf.

Figur 1 zeigt, dass der Flansch 5 gleichzeitig auch eine Seitenwand des Aktorgehäuses 2 bildet

Wie in der Ausschnittsdarstellung der Figur 1a zu erkennen ist, sind die Eingriffmittel 7 in Form von Zähnen einer Außenverzahnung ausgestaltet

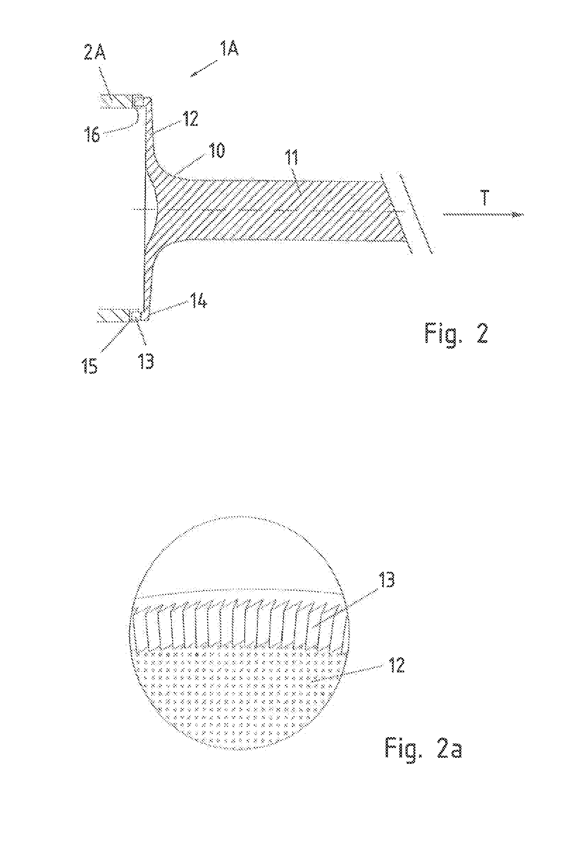

Figur 2 zeigt eine alternative Ausführungsform einer Stabilisatoranordnung 1A. Auch hier ist das Aktorgehäuse 2A in Verbindung mit einen Ende 10 eines Torsionsstababschnitts 11 teilweise dargestellt. Dieser Torsionsstababschnitt 11 ist aus einem Vollprofil hergestellt, Der abgebildete Flansch 12 wurde vollständig aus dem Ende 10 des Torsionsstababschnitts 11 herausgeformt, Der Flansch 12 weist Eingriffmittel 13 auf, welche in seinem äußeren Randbereich 14 angeordnet sind und parallel zur Torsionsachse T des Torsionsstababschnitts 11 weisend ausgerichtet sind. Diese Eingriffmittel 13 sind, wie aus dem Ausschnitt der Figur 2a ersichtlich als umlaufender Zahnkranz ausgestaltet und greifen in einen korrespondierenden, nicht näher dargestellten, Zahnkranz 15 am Aktorgehäuse 2A ein.

Der Zahnkranz 15 ist in dieser Ausführung entlang einer Stirnfläche 16 des Aktorgehäuses 2A umlaufend angeordnet. So bildet auch hier der Flansch 12 eine Seitenwand des Aktorgehäuses 2A.

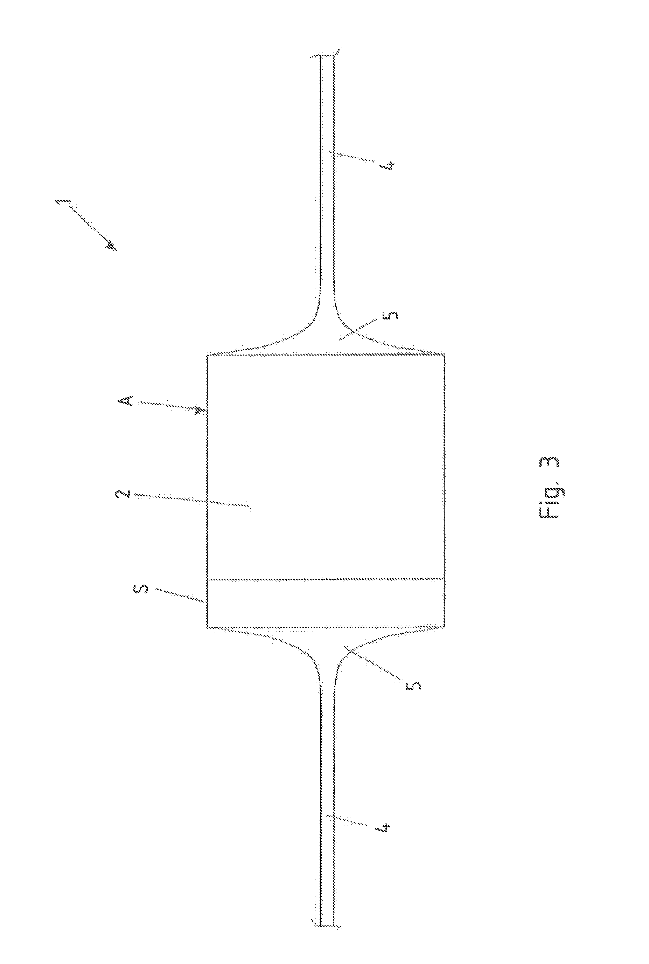

Figur 3 zeigt eine erfindungsgemäße Stabilisatoranordnung 1 mit einem Aktorgehäuse 2 sowie auf die Bildebene bezogen auf der linken Seite einen Torsionsstababschnift 4 sowie auf der rechten Seite einen Torsionsstababschnitt 4. Die Torsionsstababschnitte 4 sind jeweils über Flansche 5 mit dem Aktor A gekoppelt. Die einzelne Koppelungsvariante ist in Figur 1 sowie Figur 1a und Figur 2 sowie Figur 2a bereits detaillierter gezeigt worden. Der Aktor A selber besteht hier exemplarisch aus einem Aktorgehäuse 2 sowie aus einem mit diesem gekoppelten relativ verdrehbarem Stellglied S. Die erfindungsgemäße Koppelung ist hier auf der linken Seite zwischen Stellglied S und Flansch 5 ausgebildet sowie auf der rechten Seite zwischen Aktorgehäuse 2 und Flansch 5.

### Bezugszsichen:

- 1 -: Stabilisatoranordnung
- 1A -: Stabilisitoranordnung
- 2-: Aktorgehäuse
- 2A -: Aktorgehäuse
- 3-: Ende von 4
- 4 -: Torsionsstababschnitt
- 5 -: Flansche
- 6 -: Übergangsbereich
- 7-: Eingriffmittel
- 8 -: Innenseite von 2
- 9 -: Eingriffmittel
- 10-: Ende von 11
- 11 -: Torsionsstababschnitt
- 12 -: Flansch
- 13-: Eingriffmittel
- 14-: äußerer Randbereich
- 15-: Zahnkranz
- 16-: Stirnfläche

- A -: Aktor
- D -: Durchmesser
- S -: Stellglied
- T -: Torsionsachse

## Patentansprüche

1. Stabilisatoranordnung umfassend einen geteilten Torsionsstab und einen Torsionsstababschnitte (4, 11) verbindenden Aktor (A) mit einem Aktorgehäuse (2, 2A), an welchem Enden (3, 10) der Torsionsstababschnitte (4, 11) festgelegt sind, wobei ein mit dem Aktorgehäuse (2,2A) verbundenes Ende (3, 10) wenigstens eines Torsionsstababschnittes (4, 11) als Flansch (5, 12) ausgeführt ist, **dadurch gekennzeichnet, dass** der Flansch (5, 12) aus dem Ende (3, 10) eines Torsionsstababschnittes (4, 11) geformt ist und dass der Flansch (5) über ein in seinem Randbereich (14) angeordnetes Eingriffmittel (7, 9) mit dem Aktorgehäuse (2, 2A) in Eingriff steht.

2. Stabilisatoranordnung umfassend einen geteilten Torsionsstab und einen die Torsionsstababschnitte (4, 11) verbindenden Aktor (A) mit einem Aktorgehäuse (2, 2A), wobei ein Ende (3, 10) des Torsionsstababschnittes (4, 11) mit dem Aktor (A) gekoppelt ist und das mit dem Aktor (A) verbundene Ende (3, 10) wenigstens eines Torsionsstababschnittes (4, 11) als Flansch (5, 12) ausgeführt ist, **dadurch gekennzeichnet, dass** der Flansch (5, 12) aus dem Ende (3, 10) eines Torsionsstababschnittes (4, 11) geformt ist und dass der Flansch (5) über ein in seinem Randbereich (14) angeordnetes Eingriffmittel (7, 9) mit dem Aktor (2, 2A) in Eingriff steht.

3. Stabilisatoranordnung nach Anspruch 2, **dadurch gekennzeichnet, dass** der Flansch (5) umfangsseitig des Torsionsstababschnitts (4, 11) umlaufend ausgestaltet ist

4. Stabilisatoranordnung nach Anspruch 1 oder 3, **dadurch gekennzeichnet, dass** der Flansch (5) über entlang seiner radial äußeren Umfangsfläche angeordnete Eingriffmittel (7) mit dem Aktorgehäuse (2) in Eingriff steht.

5. Stabilisatoranordnung nach Anspruch 1 oder 4, **dadurch gekennzeichnet, dass** der Flansch (12) über in seinem äußeren Randbereich (14) angeordnete, parallel zu einer Torsionsachse (T) des Torsionsstabes weisende, axiale Eingrifiimittel (13) mit dem Aktorgehäuse (2A) in Eingriff steht.

6. Stabilisatoranordnung nach einem der Ansprüche 1 bis 5, **dadurch gekennzeichnet, dass** die Eingriffmittel (7, 9, 13, 15) als umlaufende Zahnkränze ausgeführt sind.

7. Stabilisatoranordnung nach einem der Ansprüche 1 bis 6, **dadurch gekennzeichnet, dass** die Eingriffsmittel (7, 13) einstückig an dem Flansch (5, 12) ausgebildet sind.

8. Stabilisatoranordnung nach einem der Ansprüche 1 bis 7, **dadurch gekennzeichnet, dass** wenigstens ein Torsionsstababschnitt (4) als Hohlprofil ausgeführt ist,

9. Stabilisatoranordnung nach einem der Ansprüche 1 bis 8, **dadurch gekennzeichnet, dass** wenigstens ein Torsionsstababschnitt (11) als Vollprofil ausgeführt ist,

10. Stabilisatoranordnung nach einem der Ansprüche 1 bis 9, **dadurch gekennzeichnet, dass** der Flansch (5, 12) eine Seitenwand des Aktorgehäuses (2, 2A) bildet.

11. Stabilisatoranordnung nach einem der Ansprüche 2 bis 10, **dadurch gekennzeichnet, dass** an dem Aktor (A) ein Stellglied (S) ausgebildet ist, wobei das Stellglied (S) mit dem Ende (3, 10) des Torsionsstababschnittes (4, 11) über die Eingriffmittel (7) gekoppelt ist.
